# NEW EUROPEAN PATENT SPECIFICATION

(11) **EP 0 372 355 B2**
(45) Date of publication and mention of the opposition decision: **19.03.1997**
(45) Mention of the grant of the patent: 02.02.1994
(21) Application number: 89121892.7
(22) Date of filing: 27.11.1989
(51) Int. Cl.: B29C 51/14

(54) **Process for the production of dressed panels and the panels thus produced**
Verfahren zum Herstellen verkleideter Platten und derart hergestellte Platten
Procédé de production de panneaux revêtus et panneaux obtenus par ce procédé

(30) Priority: 05.12.1988 IT 2284988
(43) Date of publication of application: 13.06.1990
(73) Proprietor: COMMER S.P.A., 20063 Cernusco sul Naviglio Milano (IT)
(72) Inventor: Siano, Dante, I-20093 Cologno Monzese (Milan) (IT)
(74) Representative: Marietti, Giuseppe

(56) References cited:
- EP-A- 0 145 832
- EP-A- 0 210 536
- EP-A- 0 348 357
- DE-A- 3 537 997
- GB-A- 2 176 743
- JP-A- 595 020
- PATENT ABSTRACTS OF JAPAN, vol. 9, no. 179 (M-399)[1902], 24th July 1985;& JP-A-60 048 324 (MEIWA SANGYO K.K.) 16-03-1985
- PATENT ABSTRACTS OF JAPAN, vol. 10, no. 115 (M-474)[2172], 30th April 1986;& JP-A-60 244 522 (NIHON SEKISOO KOGYO K.K.) 04-12-1985
- PATENT ABSTRACTS OF JAPAN, vol. 11, no. 64 (M-565)[2511], 26th February 1987;& JP-A-61 220 822 (MEIWA SANGYO K.K.) 01-10-1986

## Description

The present invention relates to a process for the production of dressed and shaped panels, and in particular, for the production of trim panels for motor vehicle interiors.

Several techniques are known at present for the production of trim panels for motor vehicles, an example of which might be that using sheets of thermoplastic materials (usually composed of a wood fibres impregnated with thermo-setting resins) which are shaped in a mould and then covered with a layer of dressing material.

In such techniques the phases of shaping the sheet and joining it to the dressing layer are separate and are therefore two distinct stages in production.

Furthermore, to join the dressing layer to the already heat hardened sheet it is necessary to use adhesives which, apart from problems of application and their possible toxicity, considerably increase the time necessary to produce the article.

In a variation of the said embodiment, there are two dressing layers on the panel consisting of a lower textile layer and an upper layer in a textured plastic material known commonly as "imitation leather" and consisting of a PVC surface layer on a ply base.

A suitably located area of the imitation leather is removed to show the underlying textile material and thus obtain an aesthetic effect more pleasing than a single dressing layer alone. Generally the layer of imitation leather is applied over the textile layer, to which it is joined by electrobonding along the perimeter of the area from which the external layer of imitation leather is to be removed. Such removal is effected by cutting the outer layer and then removing the section of imitation leather thus obtained.

Alternatively, the two layers may be bonded together along a continuous line which divides the panel into two parts, instead of along a closed perimeter.

There is also a known process in which two textile layers bonded together are joined to a thermoplastic base material during the shaping of the latter.

This process, while resolving the abovementioned shortcomings due to the separate phases of shaping and bonding the dressing layer, presents a further problem in that the imitation leather, which, as has been already stated, consists of a layer of plastic material supported on a ply base, leaves loose threads from the ply base during the cutting phase and these threads spoil the overall appearance of the panel.

One solution to this problem is the attachment of a smaller dressed panel, e.g. covered in cloth, to the appropriate place on the actual panel covered in imitation leather.

This solution, besides producing a panel with different dressings without the negative effect of the bonding, also produces the so-called "shadow effect" considerably improving the aesthetic appearance of the panel.

Obviously this solution entails considerable increase in the costs of the panel compared to those described previously, thus limiting its use to certain cases.

GB-A-2176743 in the name of COLAMCO INC., USA, discloses a process for joining two flexible materials along a seam in a trim panel. According to this document, the relevant process provides a number of different steps, namely: to first shape the base sheet with a recess where the joining line of the two dressing materials should be; then to place a foam layer, coated with adhesive on both sides, on the substrate; third, to place the two dressing materials on the adhesive foam; and finally to press the dressing materials edges inside the substrate recess.

EP-A-0348357 in the name of POLISTOCK N.V. is forming part of the state of the art in accordance to Art. 54(3) EPC for the Countries DE, ES, FR, IT, SE. This document discloses a process for the production of a panel dressed with separate dressing layers wherein said dressing layers are joined along a join perimeter and are bonded to a heated substrate and shaped with it by pressure molding. The join line in the final panel is hidden within a fold of the substrate.

EP-A-145832 discloses a process for the production of dressed panels in which to ensure the correct positioning of the join line of the two different dressing layers, said join line is clamped by two moving elements to the heated support. After this has occurred, the upper mold moves to bring the remaining area of the dressing layers into contact with the heated support to bond them together and to shape it.

There remains a need of a process for the production of panels with two or more separate dressing layers, which reduces the number of phases needed to produce the panel (and thus the production time), and which produces a better appearance of the bond area and the join between the two dressing layers.

An aim of the present invention is to overcome the above mentioned shortcomings by means of a process for producing differentially dressed panels quickly and economically, and with a good final finish on the join between the two dressing materials.

A further aim of the present invention is the production of a panel with a good final finish on the join between the two dressing materials.

In greater detail, the present invention concerns a process of the production of dressed panels according to claim 1.

The manufactured panel is of the type provided with two or more dressing layers bonded to a base sheet of a thermoplastic material, each extending over complementary areas of said panel and each visible at least in part, said panel being provided with a slot, depression or similar, located corresponding to the join perimeter between the dressing layers, in which the said join perimeter is located and retained so that it is not visible externally.

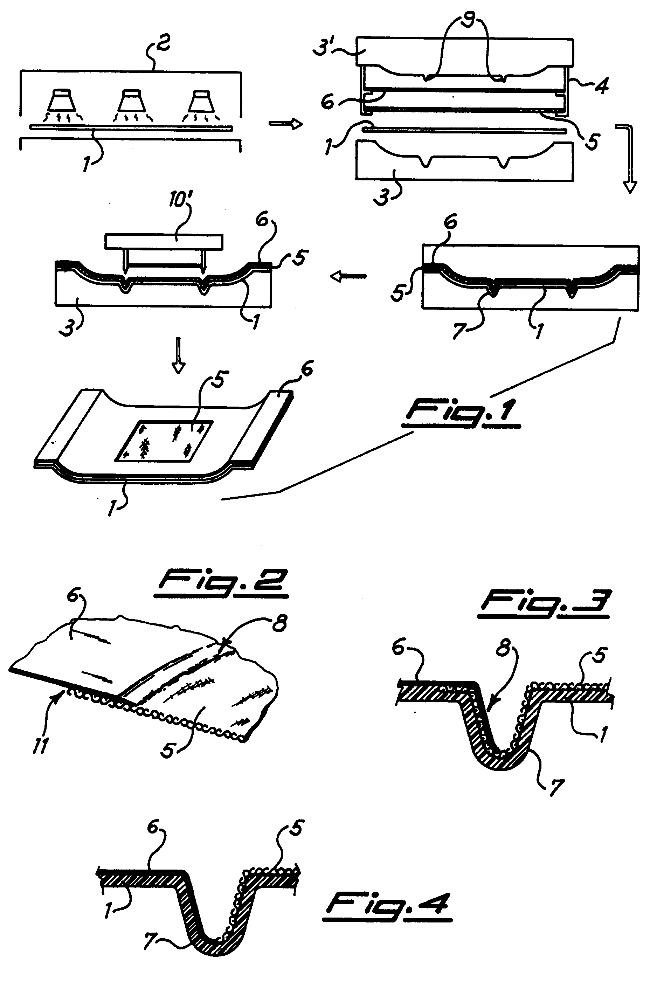

The mould for the production of the above mentioned panel dressed is of the following type. The part of the mould which bears against the aforementioned dressing layers during the forming of the panel is provided with one or more projecting parts which constitute a predetermined perimeter; and the part of the mould which bears against the aforementioned thermoplastic base sheet during the forming of the panel, is provided with one or more depressions or slots which constitue a second perimeter corresponding to the said first perimeter; the said projections and depressions having such dimensions as to produce in said base sheet one or more depressions or slots in which the join perimeter between the two or more dressing layers is located and retained so that it is not visible externally. The present invention will now be described in more detail with reference to the attached drawings which are illustrative but not limiting and in which:
Fig. 1 is a schematic diagram of the production cycle of a panel according to the present invention;
Fig. 2 is a partial view in elevation of a detail of the dressing element for the base sheet of the preceeding fig. 1;
Fig. 3 is an enlarged sectional view of the slot or depression in a first embodiment of the panel;
Fig. 4 is an enlarged section al view of the slot or depression in an alternative embodiment of the panel;
With reference to Fig.1, a base sheet 1 of a thermoplastic material is heated in an oven 2 until it reaches a certain degree of softness, where "degree of softness" here means a condition where the sheet is rendered plastic and can be bonded a the dressing layer applied to it by means of the partial melting of the surface of the said base sheet.

The base sheet thus heated is located over a mould 3, 3' where a frame 4 positions a more internal dressing layer 5, e.g. cloth, and an external dressing layer 6, e.g. imitation leather. At this point the base sheet 1 is shaped and bonded to the dressing layers 5 and 6.

The shaping and bonding of the base sheet occur in one single operation because the already mentioned partially melted surface of the base can fuse with the dressing layers to provide a permanent bond.

The upper part 3' of the mould, which bears on the dressing layers 5 and 6 during the forming and shaping of the panel, has a projecting part 9 corresponding to a concave part 10 in the lower part 3 of the mould, which presses on the base sheet 1 during the shaping.

During the shaping of the base sheet 1 is by moulding, the projecting part 9 and the concave part 10 form a slot 7 along a predetermined perimeter. This slot, or depression, 7 is corresponding to the perimeter along which the dressing layers 5 and 6 are joined, and it is shaped to form a high ratio of depth to cross-section, in order to render the join perimeter between the dressing layers invisible externally.

By "join perimeter" here is meant the area of the panel in which one dressing layer ends and the other dressing layer begins, independent of whether the two layers are bonded together or overlap each other.

Generally, such joins are effected by a bonding and cutting operation performed by a tool 10' which attaches the dressing layer 6 to the dressing layer 5 and then removes that part of the dressing layer 6 internal to the join perimeter, thus making the underlying dressing layer 5 visible (as shown in the last two stages of Fig.1).

However, due to the reduced section of the slot 7 it is better if the cutting and bonding of the dressing layers is done prior to the bonding to the base sheet 1. In this way, as shown in Fig.2, a semifinished blank product 11 is obtained in which the dressing layer 5 and the dressing layer 6 are already bonded together along the predetermined perimeter 8; the section internal to the join perimeter is preferably removed from the dressing layer 6 before it is bonded to the dressing layer 5.

Alternative methods of cutting and bonding the dressing layers are obviously possible, such as stitching, gluing and similar methods, followed by or without the cut and the removal of part of one of the layers. It is also possible to join the layers only temporarily, or not to join them together, but to join them to a means of positioning them, provided that during the phase of shaping the base sheet 1 and of bonding it to the dressing layers, the join perimeter is located corresponding to the slot 7 previously described and retained in it, as shown in figures 3 and 4.

In the embodiment shown in Fig. 3, the join perimeter 8 is obtained by permanently joining, either by stitching or bonding or by similar means, the dressing layers 5 and 6, so that a part of the dressing layer 5 is located between the base sheet 1 and the dressing layer 6. Alternatively, as previously mentioned and as shown in Fig.4, the edges of the two dressing layers need not overlap and may be some distance apart, as long as they both are retained in the slot 7.

In this way, the imperfections inevitably found in the join 8 will be located inside the slot 7 and will be thus hidden from view. Further, by shaping the panel accordingly, as shown in Fig.4, the "shadow effect" can be obtained; the same effect can be otherwise achieved only either by joining two separate panels together as previously explained, or by complex injection moulding techniques on preshaped dressings.

From the above descriptions, it is evident that the process according to the present invention produces a dressed and shaped panel, in particular for motor vehicle interiors, with optimum aesthetic

## Claims (Claims for the following Contracting State(s): BE, GB, NL)

1. A process for the production of dressed panels, in which a base sheet (1) of thermoplastic material is dressed with two or more separate dressing layers (5, 6) bonded thereto, each visible at least in part, comprising the following phases: heating the said base sheet to a predetermined degree of softness; joining together along a join perimeter (8) said dressing layers (5, 6) to obtain a single dressing element (11) in one piece, before their bonding to said base sheet (1); locating the heated base sheet and the dressing layers (5, 6) over a mould (3, 3'); aligning said join perimeter (8) to a concave part (10) and a projecting part (9) of said mold bonding the dressing layers to the base sheet by pressing said layers onto said heated base sheet and simultaneously shaping the panel in one pressure-moulding operation, producing at the same time a depression or slot (7) on the base sheet (1), corresponding to the join perimeter (8) between the dressing layers (5, 6), in which the said join perimeter is located and retained so that it is not visible externally.

2. A process according to claim 1, characterized by obtaining the said single dressing element (11) by cutting and bonding along a closed perimeter (8) two overlapped dressing layers and removing the outermost area of dressing layer (6) within such join perimeter, after the bonding of said dressing layers to the base sheet (1).

## Claims (Claims for the following Contracting State(s): DE, ES, FR, IT, SE)

1. A process for the production of dressed panels, in which a base sheet (1) of thermoplastic material is dressed with two or more separate dressing layers (5, 6) bonded thereto, each visible at least in part, comprising the following phases: heating the said base sheet to a predetermined degree of softness; joining together along a join perimeter (8) said dressing layers (5, 6) to obtain a single dressing element (11) in one piece, before or after their bonding to said base sheet (1); locating the heated base sheet and the dressing layers (5, 6) over a mould (3, 3'); bonding the dressing layers to the base sheet by pressing said layers onto said heated base sheet and simultaneously shaping the panel in one pressure-moulding operation, producing at the same time a depression or slot (7) on the base sheet (1), corresponding to the join perimeter (8) between the dressing layers (5, 6), in which the said join perimeter is located and retained so that it is not visible externally, said slot (7) being diverging outwards to produce a shadow effect.

2. A process according to claim 1, characterized by obtaining the said single dressing element (11) by cutting and bonding along a closed perimeter (8) two overlapped dressing layers and removing the outermost area of dressing layer (6) within such join perimeter, after the bonding of said dressing layers to the base sheet (1).

## Patentansprüche (Patentansprüche für folgende(n) Vertragsstaat(en): BE, GB, NL)

1. Verfahren zur Herstellung von Dekorationsplatten, wobei ein Basisflächenkörper (1) aus Thermoplastmaterial mit zwei oder mehreren gesonderten, damit verbundenen Dekorationsschichten (5, 6) ausgestattet wird, von denen jede zumindest teilweise sichtbar ist, umfassend die folgenden Schritte:
Erwärmen des Basisflächenkörpers auf einen vorbestimmten Erweichungsgrad;
Zusammenfügen der Dekorationsschichten (5, 6) längs einer Verbindungsbegrenzung (8), um ein einziges Dekorationselement (11) in einem Stück zu erhalten, und zwar vor ihrem Verbinden mit dem Basisflächenkörper (1);
Positionieren des erwärmten Basisflächenkörpers und der Dekorationsschichten (5, 6) über einer Form (3, 3');
Ausfluchten der Verbindungsbegrenzung (8) mit einem konkaven Teil (10) und einem vorstehenden Teil (9) der Form;
Verbinden der Dekorationsschichten mit dem Basisflächenkörper durch Pressen der Schichten auf den erwärmten Basisflächenkörper und gleichzeitiges Formen der Platte in einem Preß-Form-Vorgang, wobei zugleich eine Vertiefung oder ein Schlitz (7) in dem Basisflächenkörper (1) erzeugt wird, der der Verbindungsbegrenzung (8) zwischen den Dekorationsschichten (5, 6) entspricht und in dem die Verbindungsbegrenzung positioniert und festgehalten wird, so daß sie von außen nicht sichtbar ist.

2. Verfahren nach Anspruch 1,
gekennzeichnet durch Erhalten des einzigen Dekorationselementes (11) durch Zuschneiden und Verbinden von zwei überlappenden Dekorationsschichten längs einer geschlossenen Begrenzung (8) und Entfernen des äußersten Bereiches der Dekorationsschicht (6) innerhalb dieser Verbindungsbegrenzung nach dem Verbinden der Dekorationsschichten mit dem Basisflächenkörper (1).

## Patentansprüche (Patentansprüche für folgende(n) Vertragsstaat(en): DE, ES, FR, IT, SE)

1. Verfahren zur Herstellung von Dekorationsplatten, wobei ein Basisflächenkörper (1) aus Thermoplastmaterial mit zwei oder mehreren gesonderten, damit verbundenen Dekorationsschichten (5, 6) ausgestattet wird, von denen jede zumindest teilweise sichtbar ist, umfassend die folgenden Schritte:
Erwärmen des Basisflächenkörpers auf einen vorbestimmten Erweichungsgrad;
Zusammenfügen der Dekorationsschichten (5, 6) längs einer Verbindungsbegrenzung (8), um ein einziges Dekorationselement (11) in einem Stück zu erhalten, und zwar vor oder nach ihrem Verbinden mit dem Basisflächenkörper (1);
Positionieren des erwärmten Basisflächenkörpers und der Dekorationsschichten (5, 6) über einer Form (3, 3');
Verbinden der Dekorationsschichten mit dem Basisflächenkörper durch Pressen der Schichten auf den erwärmten Basisflächenkörper und gleichzeitiges Formen der Platte in einem Preß-Form-Vorgang, wobei zugleich eine Vertiefung oder ein Schlitz (7) in dem Basisflächenkörper (1) erzeugt wird, der der Verbindungsbegrenzung (8) zwischen den Dekorationsschichten (5, 6) entspricht und in dem die Verbindungsbegrenzung positioniert und festgehalten wird, so daß sie von außen nicht sichtbar ist, wobei der Schlitz (7) nach außen divergiert, um einen Schatteneffekt zu erzeugen.

2. Verfahren nach Anspruch 1,
gekennzeichnet durch Erhalten des einzigen Dekorationselementes (11) durch Zuschneiden und Verbinden von zwei überlappenden Dekorationsschichten längs einer geschlossenen Begrenzung (8) und Entfernen des äußersten Bereiches der Dekorationsschicht (6) innerhalb dieser Verbindungsbegrenzung nach dem Verbinden der Dekorationsschichten mit dem Basisflächenkörper (1).

## Revendications (Revendications pour l'(les) Etat(s) contractant(s) suivant(s): BE, GB, NL)

1. Procédé de fabrication de panneaux revêtus, dans lequel une feuille de base (1) en matière thermoplastique est revêtue avec deux couches de revêtement distinctes (5,6) ou davantage, liées à la feuille de base et visibles chacune au moins en partie, comprenant les phases suivantes : chauffage de ladite feuille de base à un degré prédéterminé de ramollissement ; jonction mutuelle desdites couches de revêtement (5,6) le long d'un périmètre de joint (8), pour obtenir un élément de revêtement unique (11) en une seule pièce, avant la liaison des dites couches à la dite feuille de base (1) ; positionnement de la feuille de base chauffée et des couches de revêtement (5,6) sur un moule (3,3') ; alignement dudit périmètre de joint (8) avec une partie concave (10) et une partie saillante (9) dudit moule ; liaison des couches de revêtement à la feuille de base par pressage desdites couches sur ladite feuille de base chauffée et, simultanément, formage du panneau en une seule opération de moulage par pression de manière à produire en même temps une dépression ou une rainure (7), sur la feuille de base (1), correspondant au périmètre de joint (8) entre les couches de revêtement (5,6), ledit périmètre de joint étant ainsi situé et retenu dans ladite rainure de sorte qu'il n'est pas visible extérieurement.

2. Procédé suivant la revendication 1, caractérisé en ce qu'on obtient ledit élément de revêtement unique (11) par coupe et liaison le long d'un périmètre fermé (8) de deux couches de revêtement en chevauchement, et enlèvement de la région extérieure de la couche de revêtement (6) à l'intérieur de ce périmètre de joint, après la liaison desdites couches de revêtement à la feuille de base (1).

## Revendications (Revendications pour l'(les) Etat(s) contractant(s) suivant(s): DE, ES, FR, IT, SE)

1. Procédé de fabrication de panneux revêtus, dans lequel une feuille de base (1) en matière thermoplastique est revêtue avec deux couches de revêtement distinctes (5,6) ou davantage, liées à la feuille de base et visibles chacune au moins en partie, comprenant les phases suivantes : chauffage de ladite feuille de base à un degré prédéterminé de ramollissement ; jonction mutuelle desdites couches de revêtement (5,6), le long d'un périmètre de joint (8),pour obtenir un élément de revêtement unique (11) en une seule pièce avant ou après la liaison desdites couches à ladite feuille de base (1) ; positionnement de la feuille de base chauffée et des couches de revêtement (5,6) sur un moule (3,3') ; liaison des couches de revêtement à la feuille de base par pressage des dites couches sur ladite feuille de base chauffée et, simultanément , formage du panneau en une seule opération de moulage par pression de manière à produire en même temps une dépression ou une rainure (7), sur la feuille de base (1), correspondant au périmètre de joint (8) entre les couches de revêtement (5,6), ledit périmètre de joint étant ainsi situé et retenu dans ladite rainure de sorte qu'il n'est pas visible extérieurement, ladite rainure (7) divergeant vers l'extérieur pour produire un effet d'ombre.

2. Procédé suivant la revendication 1, caractérisé en ce qu'on obtient ledit élément de revêtement unique (11) par coupe et liaison le long d'un périmètre fermé (8) de deux couches de revêtement en chevauchement, et enlèvement de la région extérieure de la couche de revêtement (6) à l'intérieur de ce périmètre de joint, après la liaison desdites couches de revêtement à la feuille de base (1).
